# EUROPEAN PATENT APPLICATION

(11) **EP 1 035 482 A2**
(43) Date of publication of application: **13.09.2000**
(21) Application number: 00104717.4
(22) Date of filing: 03.03.2000
(51) Int. Cl.: G06F 17/30

(54) **Remote file version reconciliation using hash codes**

(30) Priority: 05.03.1999 US 263313
(71) Applicant: MITSUBISHI DENKI KABUSHIKI KAISHA, Tokyo 100-8310 (JP)
(72) Inventor: Howard, John H., Cambridge, Massachusetts 02140 (US)
(74) Representative: Pfenning, Meinig & Partner GbR

(57) **Abstract**

A file reconciliation process in a distributed file system uses a set of journal or log files to track the history of file modification at each of different sites, or sets of directories, in a computer system. The different sites are connected by a network link. During reconciliation, sequences of version entries associated with each file in each journal are updated and compared to determine whether (1) a conflict exists for any of the files involved in the reconciliation, and (2) if not, which version of the file is the current version. The version entries contain a hash code or digest that to a high probability uniquely identifies the contents of a file. Sequences of hash codes are used to identify the sequence of file versions. Masks and site indicator fields are included in the journal files and used to track which journal files have copies of version entries for the purpose of deleting version entries when they become obsolete.

## Description

### BACKGROUND OF THE INVENTION

The present invention is related generally to the field of distributed file systems for computers, and more specifically to the reconciliation of different versions of files that may exist at different storage locations in a remotely connected computer system including server and client computers.

It is increasingly common for computer systems to use distributed file systems for the storage and retrieval of data files. This trend is displacing traditional centralized file systems, in which data files are stored on magnetic disks accessible only to application programs executing on a single computer closely coupled to the disks. As the functionality of computers has increased and their costs decreased, overall computer system performance has benefited from allowing copies of data files to exist in multiple locations. First-generation examples of these distributed file systems involve desktop workstations or personal computers connected to a local file server. Storage of files on the desktop computer enables fast execution of programs running on the desktop computers, while the existence of these files on the file server provides for data file sharing, a function required in many distributed application programs used in organizations. More recent systems enable similar coordination of data among mobile users having portable computers, users at workstations, and a central data repository that may exist in an organization.

In distributed file systems, it is generally possible that at some time there are two or more different versions of a file at different locations, and that only one version is the current or correct version to be used by all users of the system. Because of this possibility, a mechanism is employed in distributed file systems to ensure file system coherence. A file system is coherent if the correct version of a file is provided to an application program despite the possible existence of outdated or otherwise incorrect versions in the system.

One approach to maintaining file system coherence is direct user-controlled file transfer. One example of this approach is electronic mail. Other examples include a public-domain filetransfer protocol known as Kermit, and a product known as Laplink? of Traveling Software, Inc. of Washington. The Laplink? program is used primarily to transfer files between a portable computer and either a desktop computer or another portable computer. All of these file-transfer procedures allow the user of a computer great control over the file-transfer process. However, they are generally not tailored specifically to the problem of file system coherence. The user bears substantial responsibility for anticipating conflicts among versions of files, detecting such conflicts when they occur, purging obsolete versions of files, and ensuring that file updates are timely distributed to the points in the system where they are needed.

Another class of coherence techniques uses shadowing or immediate updating of data files. Such techniques are used in systems such as Network File System (NFS). In systems using these techniques, file updates are broadcast to all storage locations immediately, and in some cases the use of a file being updated is prevented until all copies have been updated. This conservative approach to maintaining coherence eliminates the possibility of conflicts and is largely transparent to the user. However, it also tends to reduce system performance and to cause other problems related to its relative lack of user control. Additionally, the technique is not well suited for mobile users who are only intermittently connected to the broader computer system.

A third general class of coherence techniques relies on the existence of a "special location" for data files within the computer system. For example, a single file server may be the only point in the system from which the correct version of a file can be obtained. Thus the file server must be involved in all file reconciliations. A common example is embodied in a program known as "Briefcase" that is included in the Windows?95 operating system distributed by Microsoft Corp. of Washington. Briefcase can be used to maintain data file coherence between a desktop personal computer and a portable computer. The desktop machine is treated as the primary data file storage site, and the portable computer as a "briefcase" which temporarily holds copies of files obtained from the desktop computer, the copies or updated versions being returned to the desktop computer upon a user's return to the office environment.

Systems which require a special location to coordinate updates fail when the special location is broken or inaccessible. Version vector systems such as CODA and Bayou avoid using a special location by generating at each site an ascending sequence of version numbers, associating a new version number with each object it creates or updates. Journal entries contain the ID of the site which performed the update and that site's version number for the update. Each current object is associated with a vector, indexed by site, of the individual sites version numbers. Vector comparisons can result in one of three answers: all components of one vector less than or equal the corresponding components of the other vector, the reverse, or some less and some greater. The latter case is used to detect inconsistent updates.

Yet another approach to the data file coherence problem is described in U.S. Patent No. 5,600,834 to Howard. A file reconciliation technique is described that uses a combination of automatic mechanisms and user control. The reconciliation technique uses a set of journal files in which the history of file creation, modification, and deletion throughout the system is recorded, each journal file maintaining the portion of the history involving a particular site, or storage location. As used therein, the term "site" refers to a working directory and its sub-directories on a particular storage medium, such as a hard disk or floppy disk. The reconciliation process described in U.S. Patent No. 5,600,834 is explicitly invoked and controlled by a user, and it operates to reconcile the versions of files and directories existing at the sites specified by the user. The process uses site directories and version entries in the journal files to determine whether there is a single current version of each file or directory, and if so copies that version to the other sites involved in the reconciliation. The process also checks for conflicts, these being indicated when different versions of a file exist in the system that appear to be derived from a common prior version. The process generally works by "merging" the sequences of version entries in each journal to reconstruct the creation/modification/deletion history for each file at the involved sites. Date and time values, referred to as "timestamps", in the journal entries are used in this merging process to place the events from the different journals in order. The process also includes timestamps in "known site"-entries used to identify the most recent time that a given site was involved in a reconciliation. This information is used to occasionally purge version entries from the journal file when it is safe to do so, in order to prevent the journal files from growing indefinitely.

The use of timestamps as described in the '834 reconciliation process can occasionally cause undesired results, because of the imperfect tracking of date and time among different computers. Under some circumstances, for example, an older version of a file existing at one site may be written over the correct version existing at another site, because the timestamps incorrectly cause the older version to appear to be more recent. This can happen, for example, when one computer has made an adjustment for Daylight Savings Time and the other computer has not yet made such an adjustment. For similar reasons, dependence on timestamps also can cause problems in the process of tracking per-site reconciliation times.

Therefore, it is desired to provide an improved method for reconciling files maintained, at different storage sites, particularly when the sites are remotely located from each other and can only communicate with each other over relatively slow long-distance communication links to replicate a large set of files.

### SUMMARY OF THE INVENTION

An improved method of reconciling different file storage sites in a distributed file system is disclosed. A set of journal or log files is used to track the history of file modification at each of the different sites. The journal files contain sequences of version entries associated with each file at the corresponding site. Each version entry contains a hash code or digest that to a very high probability uniquely identifies the contents of a corresponding version of the file. During the reconciliation process, sequences of hash codes obtained from the version entries in each journal are compared with each other to determine (1) whether a conflict exists for any of the files involved in the reconciliation, and (2) if not, which version of the file is the current version. Then the current version is copied to the other sites as necessary, and the journals updated to reflect the file 5 copying.

The hash code or digest is computed from the contents of the file according to a known message digest program such that to a very high probability the code uniquely identifies the contents of the file from which it is generated. Because different versions of a file have different contents, they likewise result in different codes. Thus the hash codes identify different versions of files independently of the files' timestamps, so that the presently-disclosed reconciliation process does not yield undesired results arising from the use of timestamps, as discussed above. The presently-disclosed process also differs from the version vector approach, because it does not depend on the sites to generate unique ascending version numbers, and it does not require that a version vector be maintained for each object.

An improved method of tracking the involvement of sites in file reconciliations is also disclosed. Each version entry in each journal file contains a site indicator field indicating which of the journal files for the other sites has a copy of the entry. When a version entry is created during a reconciliation, the site indicator field is set to a value indicating which sites are involved in the reconciliation and therefore have a copy of the version entry. When all sites have a copy of the version entry as indicated by the site indicator field, it is safe to delete any preceding version entries. Because this tracking process uses the version entries, it further exploits the uniqueness of the hash codes and avoids problems associated with the use of timestamps.

Other aspects, features, and advantages of the present invention are disclosed in the detailed description which follows.

In another aspect, the sites include a client site and a server site remotely connected to each other by a network link for transporting bulk data using the TCP/IP protocol.

### BRIEF DESCRIPTION OF THE SEVERAL VIEWS OF THE DRAWING

Figures 1 and 2 are directory listings of two data file storage sites in a computer system;
Figure 3 is a diagram of the structure of a journal file used in the presently disclosed reconciliation process;
Figures 4 through 6 illustrate the structures of components of the journal file of Figure 3;
Figure 7 is a flow diagram of the presently disclosed reconciliation process;
Figure 8 is a flow diagram of part of the process by which version entries in the journal file of Figure 3 are created during the reconciliation process of Figure 7;
Figures 9 to 11 are time line diagrams depicting examples of activity affecting files involved in reconciliation; and
Figure 12 is a block diagram of a client-server system using remote reconciliation according to the invention.

### DETAILED DESCRIPTION OF THE INVENTION

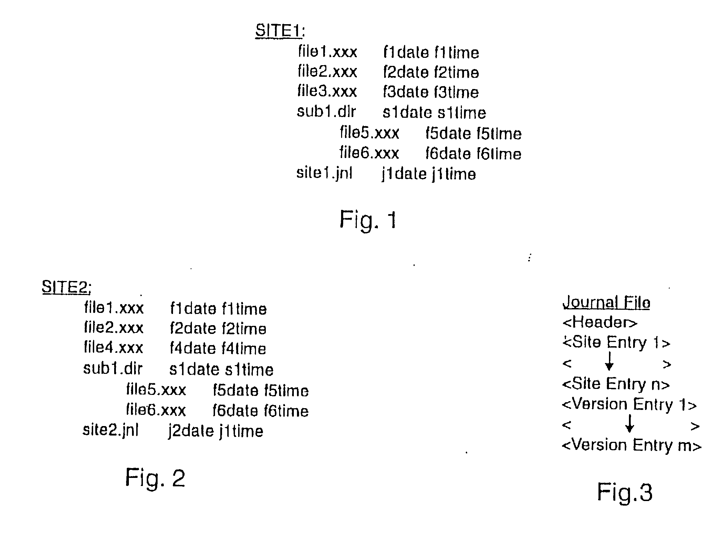

Figures 1 and 2 show listings of files existing at two separate sites referred to as SITE1 and SITE2 respectively. The files are listed by filename. SITE1 contains three user files filel.xxx, file2.xxx, and file3.xxx, a subdirectory subl.dir containing two additional files file5.xxx and file6.xxx, and a journal file sitel.jnl. The 'xxx' values represent file type extensions that identify the files as user data files. SITE2 contains generally the same files as SITE1, except that it contains a file file4.xxx not contained in SITE1, and it does not have file3.xxx. The journal file for SITE2 is named site2.jnl.

The user files and directory files shown in Figures 1 and 2 axe created, read, modified, and deleted by a user of the computer system or systems on which the sites SITE1 and SITE2 reside. Further, the files and directories in the sites SITE1 and SITE2 are generally intended to mirror each other. For example, the site SITE1 may be an area on the hard disk of a user's workstation, and the site SITE2 an area on a large disk in a file server used to hold shared or backup copies of the workstation's files. Thus periodically the user files and directories at the two sites are reconciled with each other so that both sites have the latest copies of the files and directories.

Figures 3 through 6 show the structure of a journal file. As shown in Figure 3, a journal file consists of a Header, one or more Site entries, and one or more Version entries. There may be more than one Header, as is the case if a site has subdirectories, but Site entries are only found after the first Header line. A Site entry exists for each site that has been involved in a reconciliation. A Version entry is added to the journal file for each version of each file that has existed at a site. Version entries are purged when they become obsolete, so the Version entries in the journal file at any given time represent only the pertinent version history for each file.

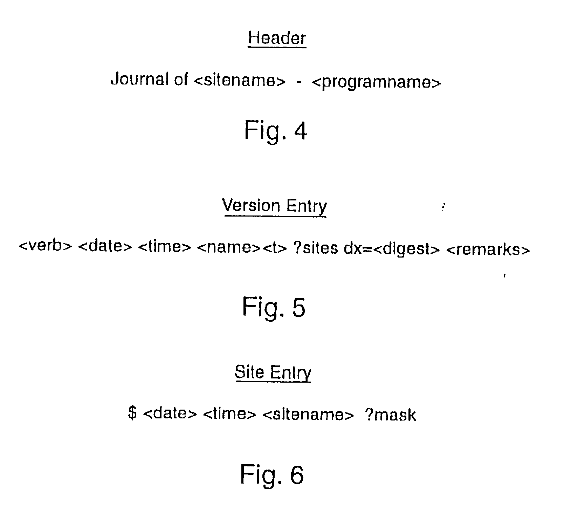

The Header structure is shown in Figure 4. The site whose history appears in the journal file is identified in a field labelled <sitename>. The Header also includes a field labelled <systype> used to identify the type of computer system on which the site resides, and a field labelled <programnname> to identify the version of the reconciliation program that created the journal file.

| Figure 5 shows a Version entry including fields: | |
|---|---|
| <verb> | An action performed: |
| | + Created or Modified |
| | - Deleted |
| <date> | Date action performed |
| <time> | Time action performed |
| <name> | Name of file acted on |
| <t> | Type of file acted on: |
| | (blank) Ordinary file |
| | / Subdirectory |
| | @ Symbolic Link |
| ?sites | Bit field indicating which sites do NOT know about this Version; omitted if Version known at all sites. Bit-to-site mapping defined in the mask field of Site entries. |
| <digest> | Unique hash code or digest of the contents of the file that resulted from the action. "dt" prefix indicates file is a text file; "db" indicates binary file. |
| <remarks> | Remark whose use depends on context. Two special remarks are: |
| | !was <name> (saved file) |
| | !deleted <name> (deleted directory) |

As shown in Figure 6, a Site entry includes several fields, these being described as follows:

| | |
|---|---|
| <date> | Date site last involved in reconciliation |
| <time> | Time site last involved in reconciliation |
| <sitename> | Name of site |
| ?mask | Bit mask to be used for this site in site field of Version entries |

Based on the above description, the following shows exemplary journal files for the sites shown in Figures 1 and 2:
Journal of SITE1
$ <date> <time> SITE2 ?1
$ <date> <time> SITE1 ?2
+ f1date f1time file1.xxx dt=aaaaa
+ f2date f2time file2.xxx dt=bbbbb
+ f3date f3time file3.xxx dt=ccccc
+ s1date s1time sub1.dir/

Journal of SITE1/sub1.dir
+ f5date f5time file5.xxx dt=eeeee
+ f6date f6time file6.xxx dt=fffff

Journal of SITE2
$ <date> <time> SITE2 ?1
$ <date> <time> SITE1 ?2
+ f1date f1time file1.xxx dt=aaaaa
+ f2date f2time file2.xxx dt=bbbbb
+ f4date f4time file4.xxx dt=ddddd
+ s1date s1time sub1.dir/

Journal of SITE2/subl.dir
+ f5date f5time file5.xxx dt=eeeee
+ f6date f6time file6.xxx dt=fffff

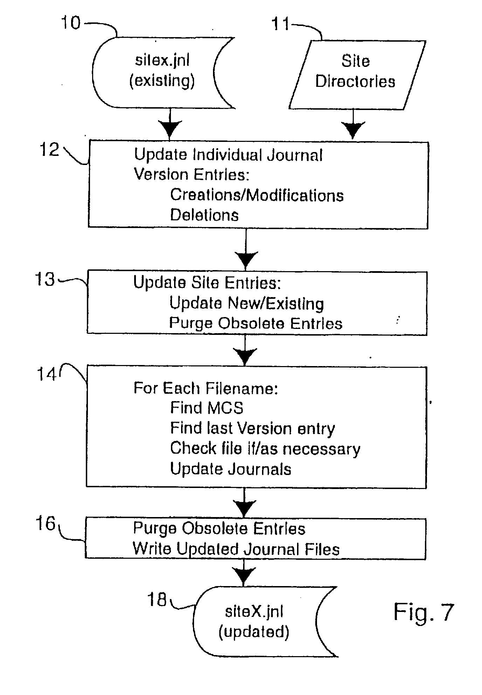

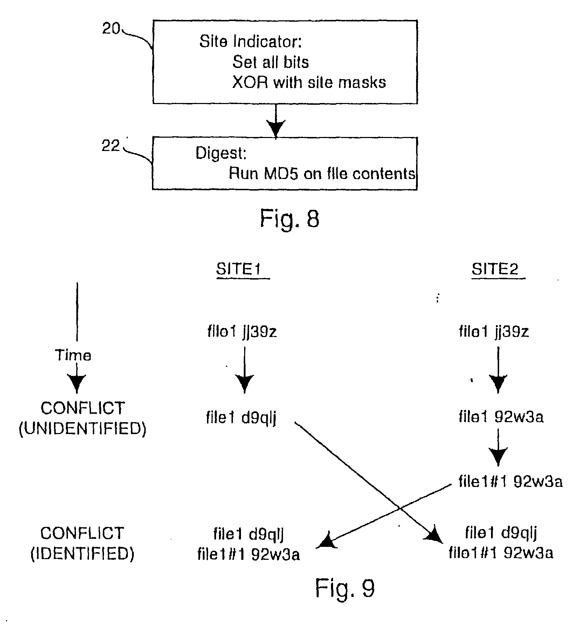

Figure 7 illustrates the reconciliation process. The process reads the existing journal files 10 and directories 11 associated with each site involved in the reconciliation. At step 12, the Version entries in the journals for each site are updated to reflect the current versions of the files and directories at the respective sites. First the actual contents of the sites involved in the reconciliation are determined by reading the site directories and sub-directories. New "+" Version entries are created for those files and directories that either (1) have no corresponding Version entries (and are therefore assumed to be newly created), or (2) have a date and time different from the date and time included in the last Version entry for that file or directory in the journal file (and are therefore assumed to have been changed). The method by which "+" Version entries are created is described in greater detail below with reference to Figure 8.

In a file has a corresponding Version entry and the timestamps match, then the version of the file existing at the site is consistent with the last Version entry for that file. In this case, a new Version entry is not created. In this manner, the unnecessary re-calculation of digests is avoided. Because the calculation of digests is compute-intensive, this feature of creating new digests for only new or modified files enhances the performance of the reconciliation process.

It is possible that the latest "version" of a file is actually its deletion. A pass is made through the journal to determine if any files or directories named in existing version entries have been deleted from the file system. For any such files, new "-" Version entries including the names of the delet files or directories are created, indicating that the last action taken was the deletion of the file at the corresponding site.

As the journals are read in step 12, their Site entries are merged into a single master list of known sites, including both those sites which are participating in the current reconciliation and also other sites mentioned in the journals. The master list also contains the mask bits to be used in the new journals, and a date and time of the last known reconciliation for each site. The Site entries are then updated in step 13 as follows: First, the entry for each site involved in the current reconciliation is updated to contain the current time. Then, obsolete sites (which have not been heard from for a long time, such as one month) are purged. The resulting list of sites, including those not participating in the current reconciliation, will eventually be included in all the new journals for the participating sites.

It should be noted here that the assignment of mask bits to sites is meaningful only within a particular journal. When journals are merged as described above, the mask bits in both the Site and the Version entries are re-mapped appropriately to maintain the associations between versions and sites. In the illustrated embodiment, the mask bits are assigned to sites as follows: The first site mentioned in a journal is given mask value 1, the second site is given mask 2, the third is given mask 4, the fourth is given mask 8, and so on. This assignment is arbitrary, and may be done in other ways in alternative embodiments. When a site is abandoned, its corresponding mask bit is freed for use by another site. Later sites automatically move up to fill in the gap created.

The reconciliation process then proceeds to step 14. First, the sequences of Version entries for each filename in the journals are compared. This process employs an algorithm known as the "maximum commmon subsequence" or MCS algorithm. The MCS algorithm finds a subsequence of "common" Version entries for each filename, i.e., Version entries that are contained in all of the journal files for the sites being reconciled, if such a subsequence exists. This common subsequence forms the basis for further action by the reconciliation process.

The next step is to identify the last version entry appearing in any journal file after the last common entry, if such an entry exists. If no journal file has a version entry for a data file after the last common version entry, then the current version of the file already exists at each site. In this case, no further reconciliation action needs to be taken for that file. Otherwise, the next step is to check for conflicts. A conflict exists when either (1) no common subsequence exists for the filename in the journals of the sites being reconciled, or (2) different Version entries exist in two or more journals after the last common Version entry. In either case it is not possible for the reconciliation process to determine from the hash codes which version is the most up to date. In this case, one of the conflicting versions is renamed using a unique and distinctive name, thus eliminating the conflict. The choice of which version to rename is arbitrary; one simple way to choose is to pick the version having an earlier timestamp. After this renaming, both conflicting versions are replicated to other sites as necessary. and the user is notified so that the two files may be compared and appropriate remedial action taken.

If no conflict is found for a given filename, then the current version of the file, which exists at a site whose journal file has a Version entry subsequent to the last common Version entry, is copied to the other sites. Often the current version exists at only one site. However, it is possible for the current version to exist at more than one site before any copying is done.

In such a case, the version is copied from any oil the sites where it exists, and is copied to only those sites where the current version does not exist. As the copying takes place, new "+" Version entries are appended to the journals for the sites receiving the current version of the file.

It may be that the file is being copied between two different types of systems, for example from a UNIX system to a Windows system. These systems use different characters to indicate the end of a line of text in text files. In such a case, the end-of-line characters are modified during the file copying process as necessary to ensure proper compatibility with the target system. As noted below, these minor modifications to text files do not affect the ability of the hash code to uniquely identify the file, and so the hash code can be copied unmodified.

If the last Version entry after the latest Version entry in the MCS is a "-" Version entry, indicating that the file has been deleted, the file is deleted from those sites where it still exists, and "-" Version entries are appended to the journals accordingly.

In step 16 the journals are inspected again to purge obsolete Version entries, in order to prevent the journal files from growing indefinitely. A Version entry becomes obsolete when it either (1) precedes any Version entry common to all journals, or (2) is older than some reasonable age, for example one month. This latter action is taken to handle old deletions, or "-" entries, which are typically the last entries for files and so do not precede other Version entries for those files. After the obsolete Version entries have been purged, the updated journals are written back out as updated journal files 18 for use in a subsequent reconciliation.

It should be noted that in the foregoing description the last version entry in the MCS is especially important, because it represents the most recent time that all of the sites saw a given version of the file. Further, the most recent Version entries in the journals are also especially important, because they represent what versions are currently stored at the sites. Thus a version of the MCS algorithm is used that reflects the weight of these entries, giving preference to matching recent and currently existing Versions. This weighting is sensible for the reconciliation process as described, which attempts to bring all sites up to date. However, other weightings of the version entries are possible, and may be preferred in alternative embodiments of the reconciliation process.

### The creation of the "+" Version entries shown in Figure 5 is now described with reference to Figure 8. At the time a Version entry is created, the values to be included in the date, time, name, and type fields are known, so these are simply inserted in their respective fields. The site indicator is created as shown in step 20. When a Version entry is first created, its mask is set for all sites, except for the site at which the version is created, indicating that it is unknown at all sites but that one site. Successful reconciliations of this Version with other sites result in resetting corresponding mask bits for the Version, indicating that the Version is known at the additional sites. The masks are preserved from reconciliation to reconciliation. When all of its mask bits have been reset, the Version is known to have been propagated everywhere. Once a Version is known everywhere, all previous Version entries for the same file are obsolete and may be safely discarded.

The hash code or digest is created in step 22. A procedure known as Message Digest version 5 (MD5) is run using the contents of the file as its input. Based on this input, MD5 computes a 16-byte (128-bit) digest that has an extremely high probability of uniquely identifying the file among all possible files, including earlier and later versions of the same file. The ability to uniquely identify a file is due in part to the large number of possible codes, which is on the order of 10⁴⁰ or roughly one million to the one millionth power. There are also other ways in which a hash code could be generated. It is desirable to use an algorithm that yields an acceptably low rate of false matches.

For text files, end-of-line characters are ignored in the computation of the digest. This feature enables the transparent modification of these characters when files are being copied between different types of systems, as discussed above. This feature is an optimization; it may be useful in alternative embodiments to include these characters in the digest computation.

### EXAMPLES

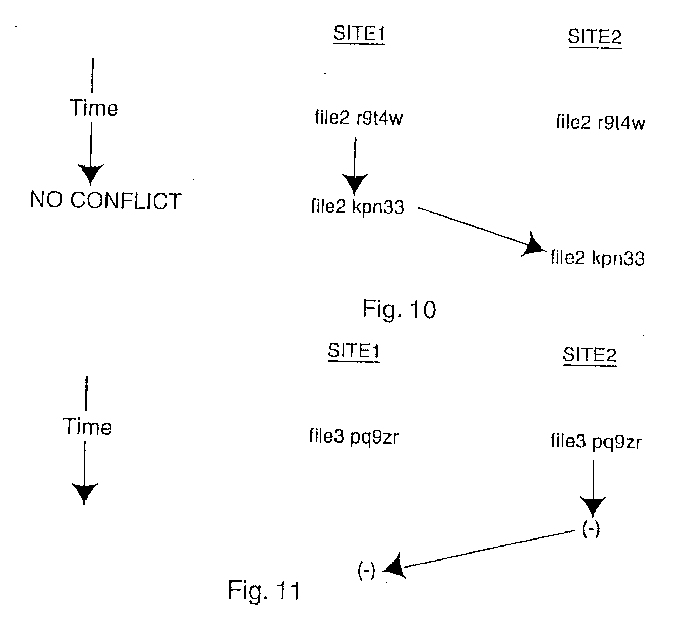

Examples are given below to illustrate the presently-disclosed reconciliation process and its results. Example 1 is the normal, no-conflict case. Example 2 shows a conflict. Examples 3 and 4 illustrate the creation of Site entries and the purging of obsolete Version entries. Figures 9 - 11 represent the sequences of modifications and copying that yield the scenarios below for filel, file2 and file3 respectively. The vertical arrows indicate modification and the horizontal arrows indicate copying. The file extensions have been removed to reduce extraneous detail, and 5-bit alphanumeric values are used to represent hash codes calculated from different versions of the files. In practice the hash codes are much longer strings, as discussed above.

### Example 1 - No Conflict

1. Existing journal files (from some previous reconciliation):

| SITE1 | SITE2 |
|---|---|
| + file1 jj39z | + file1 jj39z |
| + file2 r9t4w | + file2 r9t4w |
| + file3 pq9zr | + file3 pq9zr |

2. Current site directories, showing modification of file2 at sitel and deletion of file3 at site2 since the previous reconciliation:

| SITE1 | SITE2 |
|---|---|
| file1 jj39z | file1 jj39z |
| file2 kpn33 | file2 r9t4w |
| file3 pq9zr | |

3. Results of initial update of journals, reflecting the current contents of the sites. New Version entries for file2 at site1 and file3 at site2 have been added.

| SITE1 | SITE2 |
|---|---|
| + file1 jj39z | + file1 jj39z |
| + file2 r9t4w | + file2 r9t4w |
| + file2 kpn33 | |
| + file3 pq9zr | + file3 pq9zr |
| | - file3 |

4. Result of merging and conflict checking. Matches between most recent versions of files are indicated by dashed lines. The new version of file2 and the deletion of file3 are detected because the corresponding Version entries appear after the most recent common entries for those files.

| SITE1: | | SITE2: |
|---|---|---|
| + file1 jj39z | --- | + file1 jj39z |
| + file2 r9t4w | --- | + file2 r9t4w |
| + file2 kpn33 | | |
| + file3 pq9zr | --- | + file3 pq9zr |
| | | - file3 |

5. Result of copying file2, deleting file3, and updating the journals accordingly:

| SITE1 | SITE2 |
|---|---|
| + file1 jj39z | + file1 jj39z |
| + file2 r9t4w | + file2 r9t4w |
| + file2 kpn33 | + file2 kpn33 |
| + file3 pq9zr | + file3 pq9zr |
| - file3 | - file3 |

6. Corresponding updated site contents:

| SITE1 | SITE2 |
|---|---|
| file1 jj39z | file1 jj39z |
| file2 kpn33 | file2 kpn33 |

7. Result of purging old versions from the journals,' assuming no other sites exist:

| SITE1 | SITE2 |
|---|---|
| + file1 jj39z | + file1 jj39z |
| + file2 kpn33 | + file2 kpn33 |
| - file3 | - file3 |

### Example 2 - Reconciliation with a conflict

Continuing from the site contents and journals in 6 and 7 above, suppose the versions of filel at both sites are updated inconsistently.
8. New site contents after conflicting updates to file 1:

| SITE1 | SITE2 |
|---|---|
| file1 d9q1j | file1 92w3a |
| file2 kpn33 | file2 kpn33 |

9. Result of updating journals to reflect new site contents, followed by merging and conflict detection:

| SITE1 | | SITE2 |
|---|---|---|
| + file1 jj39z | --- | + file1 jj39z |
| + file1 d9q1j | | + file1 92w3a |
| + file2 kpn33 | --- | + file2 kpn33 |
| - file3 | --- - | - file3 |

A conflict is detected for filel because the last common version is followed by non-matching versions at both sites.
10. Site contents as result of renaming one of the conflicting versions:

| SITE1 | SITE2 |
|---|---|
| file1 d9q1j | filel#1 92w3a |
| file2 kpn33 | file2 kpn33 |

11. Corresponding updated journals:

| SITE1 | | SITE2 |
|---|---|---|
| + file1 jj39z | --- | + file1 jj39z |
| + file1 d9q1j | | + filel#1 92w3a |
| + file2 kpn33 | --- | + file2 kpn33 |
| - file3 | --- - | - file3 |

where "filel#1" is a new unique file name assigned by the reconciliation program. Now there is a new file at each site.
12. Result of copying the new versions to make both sites consistent:

| SITE1 | SITE2 |
|---|---|
| file1 d9q1j | file1 d9q1j |
| file1#1 92w3a | file1#1 92w3a |
| file2 kpn33 | file2 kpn33 |

13. Resulting journals:

| SITEI | SITE2 |
|---|---|
| + file1 jj39z | + file1 jj39z |
| + file1 d9qlj | + file1 d9qlj |
| + file1#1 92w3a | + file1#1 92w3a |
| + file2 kpn33 | + file2 kpn33 |
| - file3 | - file3 |

14. Assuming that no other sites exist, obsolete versions can be purged, resulting in:

| SITE1 | SITE2 |
|---|---|
| + file1 d9glj | + file1 d9qlj |
| + file1#1 92w3a | + file1#1 92w3a |
| + file2 kpn33 | + file2 kpn33 |
| - file3 | - file3 |

### Example 3 - Creation of Site entries

1. Assuming the above reconciliation between sites SITE1 and SITE2 as a beginning point, the Site entries in each journal file are as follows:
   site1.jn1:
   $ datel time1 SITE1 ?01
   $ datel time1 SITE2 ?02

   site2.jn1:
   $ date1 time1 SITE1 ?01
   $ date1 time1 SITE2 ?02
2. Subsequently, a reconciliation is performed between SITE1 and a new site SITE3. The new Site entries are as follows:
   site1.jn1:
   $ date2 time2 SITE1 ?01
   $ date1 time1 SITE2 ?02
   $ date2 time2 SITE3 ?04

   site2.jn1 (unchanged):
   $ date1 time1 SITE1 ?01
   $ date1 time1 SITE2 ?02

   site3.jn1:
   $ date2 time2 SITE1 ?01
   $ date1 time1 SITE2 ?02
   $ date2 time2 SITE3 ?04

### Example 4 - Managing site indicators and purging old versions

1. Examples 1 and 2 assumed that only SITE1 and SITE2 existed. If there had been another site, say SITE3 with site mask ?4, the older journal entries would not have been purged and the journals would have contained:

| SITE1 (?1) | SITE2 (?2) | SITE3 (?4) |
|---|---|---|
| + file1 jj39z | + file1.jj39z | + file1 jj39z |
| + file1 d9q1j ?4 | + file1 d9q1j ?4 | |
| + file1#1 92w3a ?4 | + file1#1 92w3a ?4 | |
| + file2 r9t4w | + file2 r9t4w | + file2 r9t4w |
| + file2 kpn33 ?4 | + file2 kpn33 ?4 | |
| + file3 pq9zr | + file3 pq9zr | + file3 pq9zr |
| - file3 ?4 | - file3 ?4 | |

The obsolete entry for filel (jj39z), for example, can not be purged because the entry that follows it (d9qlj) is not yet known at all sites.
2. Now, if a reconciliation is performed between SITE2 and SITE3 (but not SITE1), the appropriate files would be copied to SITE3 and their journals would be updated to reflect this:

| SITE1 | SITE2 | SITE 3 (?4) |
|---|---|---|
| + file1 jj39z | + file1 jj39z | + file1 jj39z |
| + file1 d9qlj ?4 | + file1 d9qlj | + file1 d9qlj |
| + file1#1 92w3a ?4 | + file1#1 92w3a | + file1#1 92w3a |
| + file2 r9t4w | + file2 r9t4w | + file2 r9t4w |
| + file2 kpn33 ?4 | + file2 kpn33 | + file2 kpn33 |
| + file3 pq9zr | + file3 pq9zr | + file3 pq9zr |
| - file3 ?4 | - file3 | - file3 |

3. Obsolete entries can now be purged from the journals at SITE2 and SITE3 since the new entries are known to be present at all sites:

| SITE1 (?1) | SITE2 (?2) | SITE3 (?4) |
|---|---|---|
| + file1 jj39z | | |
| + file1 d9qlj ?4 | + file1 d9qlj | + file1 d9qlj |
| + file1#1 92w3a ?4 | + file1#1 92w3a | + file1#1 92w3a |
| + file2 r9t4w | | |
| + file2 kpn33 ?4 | + file2 kpn33 | + file2 kpn33 |
| + file3 pq9zr | | |
| - file3 ?4 | - file3 | - file3 |

The journal at SITE1 will be purged the next time it is reconciled with either SITE1 or SITE3.

An improved file reconciliation process has been described having application to a variety of distributed file systems. The disclosed reconciliation process is susceptive of modification in many ways. For example, it would be possible when updating Version entries to create new Version entries for all files and directories found at a site, without regard to whether their contents have changed as indicated by the timestamps. This change would simplify the process somewhat, but at the cost of degraded performance, due to the compute-intensive and unnecessary recalculation of digests for unchanged files. And as mentioned above, the specific digest algorithm could be any of a number of algorithms that yield suitably unique digests.

Also, the Version entries in the journal files could receive different weighting with respect to their position in the sequence of Version entries. For example, some Version entries, as specified by a user, could be ignored entirely, based either on position in the sequence or timestamp. Such an approach might be useful, for example, if sites are to be reconciled only up to some earlier date or up to some earlier existing version.

As described above, the disclosed reconciliation process relies upon the ability of the processor on which the process is running to directly access the files and directories at each site. Other mechanisms may be employed to carry out file operations.

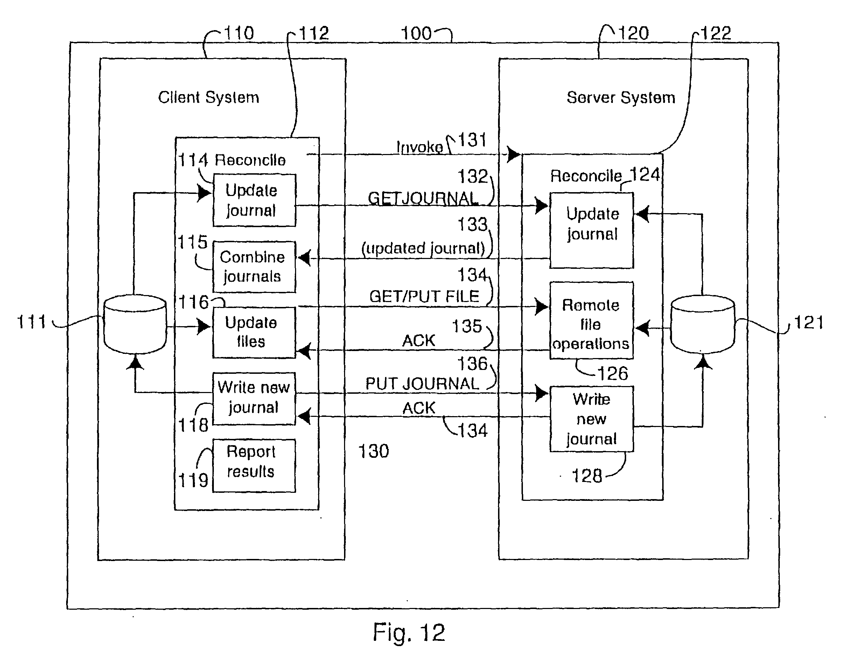

The reconciliation process, as described above, can be adapted to operate remotely. In Figure 12, a distributed file system 100 includes a client system 110 at a client site, a server system 120 at a server site connected to each other by a communication link 130. The client and the server can use the TCP/IP protocol on the link to communicate with each other over a readily available communications network, such as the Internet.

As stated above, both sites maintain file storage systems 111 and 121 that are intended to mirror each other. However over time, the files at the two sites will begin to differ, particularly if the sites are remote from each other and users update the files when there is no communication link between the sites, for example, the client system 10 is a laptop computer in possession of a traveling user. At some point it becomes necessary to reconcile the storage systems 111 and 121. More particularly, it is desired to reconcile the storage systems will the client and server remain remote.

As shown in Figure 12, remote reconciliation proceeds as follows. While connected to the server 120, the user of the client 110 starts-up a client copy 112 of the reconciliation process on the client system. Concurrently, the client invokes a server copy 122 of the reconciliation process on the server using an invoke command invocation 131, such as the UNIX ?rlogin? or ?rsh? commands, on the link 130. The two copies of the reconciliation process can then cooperate.

Each copy (111,121) of the process updates (114, 124) a local copy of the journal to reflect the latest copies of the files on the local storage systems (112,122). In response to GETJOURNAL command 132 issued by the client, the server transmits the updated journal 133 to the client. The client merges the journal as previously described (combine journal) 115.

After the client has generated a merged journal, the client issues GET FILE or PUT FILE commands 134 to copy files that are different between the client and the server. This updates files 116 directly on the client and uses remote file operations 126 on the server to update its mirrored copies. Each update can be confirmed with an ACK response 134 to indicate that the step was successfully completed.

After the storage systems have been reconciled at the file level, the client transmits an updated and combined journal back to the server using the PUTJOURNAL command 136 which can also be acknowledged. The updated and merged journal can now be written (write new journal) 118, 128 to respective local storages replacing previous copies. The results of the reconciliation can he reported in step 119.

As an advantage, this remote reconciliation does not rely on a network file system. As a result, reconciliation gains more direct control over file system details like timestamps, access controls, and symbolic links. However, the primary gain is a performance improvement, which derives from two factors.

First, the most time-consuming part of a reconciliation process is the journal update step, which scans the local site for changed files. In remote reconciliation, the client and server can do this in parallel, thus speeding up the combined task. Second and more important, the entire update by the server is done using only local file system I/O commands, rather than commands communicated via the network connection.

Only a relatively few large messages are exchanged over the link 130, the changed files and the updated journal, rather than many small ones. Disregarding lower-level protocol implementation, a remote reconciliation process requires one exchange to get the journal, one to put the journal, and one exchange for each changed file. Furthermore, the link uses a transport protocol optimized for efficient bulk transfers, using, for example, extensive lossless data compression.

The foregoing description of the reconciliation process is implemented as a sequence of discrete steps; read and update journals, then merge them, then update files, and finally write new journals. It is also possible to apply these steps sequentially to each subdirectory of a hierarchical file directoty, or even a file-by-file basis. As an advantage, the work done prior to an interruption in the reconciliation process can be retained for later use.

It will be apparent to those skilled in the art that other modifications to and variations of the above-described methods and apparatus are possible without departing from the inventive concepts disclosed herein. Accordingly, the invention should bi viewed as limited solely by the scope and spirit of the appended claims.

## Claims

1. A method of reconciling different data files stored at a client site and a server site connected to each other by a remote network link, comprising the steps of:
generating hash codes, each hash code uniquely identifying a corresponding version of a data file by the contents thereof;
storing the generated hash codes in a client journal file and a server journal file, the hash codes in each journal file being stored in a sequence indicating the order in which different versions of the data file have been stored at the corresponding site;
requesting, by the client site, a copy of the server journal file;
combining the server journal file with the client journal file to generate a combined journal file at the client site;
analyzing the sequences of hash codes from the combined journal file to determine (1) which version of the data file is the current version, (2) the site or sites at which the current version is stored, and (3) the site or sites at which the current version is not stored;
replacing the current version of the data file from a site at which it is stored to the site or sites at which it is not stored via the network link.

2. The method according to claim 1, wherein the combined journal file is updated to reflect the copying.

3. The method according to claim 2, wherein the update journal file is send to the server site via the network link after the copying.

4. The method according to claim 1, wherein the files are transported using a TCP/IP protocol over the network link.

5. The method according to claim 1, wherein the steps of analyzing and replacing are performed concurrently at each site.
